# EUROPEAN PATENT SPECIFICATION

(11) **EP 3 590 751 B1**
(45) Date of publication and mention of the grant of the patent: **13.04.2022**
(21) Application number: 18181674.5
(22) Date of filing: 04.07.2018
(51) Int. Cl.: B60K 35/00

(54) **METHOD FOR OPERATING A DISPLAY DEVICE OF A MOTOR VEHICLE, CONTROL MODULE, DISPLAY DEVICE, AND MOTOR VEHICLE**
VERFAHREN ZUM BETREIBEN EINER ANZEIGEVORRICHTUNG EINES KRAFTFAHRZEUGS, STEUERMODUL, ANZEIGEVORRICHTUNG UND KRAFTFAHRZEUG
PROCÉDÉ POUR FAIRE FONCTIONNER UN DISPOSITIF D'AFFICHAGE D'UN VÉHICULE À MOTEUR, MODULE DE COMMANDE, DISPOSITIF D'AFFICHAGE ET VÉHICULE À MOTEUR

(43) Date of publication of application: 08.01.2020
(73) Proprietor: AUDI AG, 85045 Ingolstadt (DE)
(72) Inventor: Hélot, Jacques, 85051 Ingolstadt (DE); Müller, Ulrich, 85055 Ingolstadt (DE); Redeker, Immo, 85051 Ingolstadt (DE); Mertens, Joris, 85051 Ingolstadt (DE)

(56) References cited:
- DE-A1-102009 006 659
- DE-A1-102010 055 144
- DE-A1-102013 213 600

## Description

The invention relates to a method for operating a display device of a motor vehicle. The display device comprises a display screen unit with a display surface, wherein the display screen unit comprises a sight protection element. A display screen unit is defined as component or construction part to display a graphical element, for example a graphical user interface ("GUI"). A sight protection element, that could likewise be called visibility protection element, visual protection element, or switchable blind element, is defined as a structural element or component or member that is designed to set or adjust or regulate a degree of a transparency and/or transmissivity of the display screen unit. In other words, the sight protection element is likewise designed to set or regulate or adjust a degree of opacity.

Transparent displays are known that are laminated with a second film or layer, e.g., with a switchable foil or a switchable film, as well as displays that are designed to display in black or transparent. In a basic version the entire second layer is opaque.

DE 10 2016 116 569 A1 describes a display panel with front side and a back side, wherein displayed information, in particular a text, characters or a picture, at least from the front side may be viewed, and at least one disc with switchable, in particular electrically switchable transparency and/or transmissivity, wherein the disc is arranged on one side of the display panel.

DE 10 2013 213 600 A1 relates to a method for controlling an information display in a vehicle, in which by means of a display device information is displayed, and the light transmission of a disc that is arranged, in a viewing direction of a position in the interior of the vehicle on the display device, in front of the display device, is controlled in response to a driving condition of the vehicle.

DE 10 2010 055 144 A1 describes a device that has a freely programmable display area, e.g., a plasma-display, for displaying information.

DE 10 2009 006 659 A1 describes a device that has a display consisting of liquid crystal cells, arranged at a side facing away from a viewer, where transparency and/or gloominess of the display is reversibly changeable by applying an electrical voltage.

A user of a vehicle may decide whether to buy, e.g., a car comprising such display device, or to buy a car that has a regular display device. A producer of vehicles thus provides different variants of vehicles, differing in the hardware variants of the display. This requires high investments, and long periods of development. A further disadvantage is that a user of the car could probably spend a lot of time figuring out what degree of transparency of the display he would like to set, for example before buying or leasing a vehicle.

It is an object of the invention to improve a flexibility and a handling of a display device.

This object is solved by the inventive method, and the inventive devices, respectively, according to the independent claims. Advantageous embodiments of expedient developments of the invention are indicated in the depended claims.

The invention is based on the idea to provide and operate a display device that comprises a display screen unit with a display surface, whereby the display screen unit also comprises a sight protection element that is designed to set for each of the subareas a respective degree of a transparency depending on an unlock signal that is provided in certain cases of vehiclerelated conditions or other given conditions. A subarea to be changed in its degree of transparency may, e.g., be a third of a display surface, or, e.g., as small as a segment or pixel. The unlock signal predetermines which of the subareas are switched to a different degree of transparency compared to a degree of transparency in a basic mode of the display unit.

The invention allows a context-specific and/or user-specific change of the degree of transparency of at least one subarea of the display screen unit. In addition to that the amount of pixels that may be activated on the display layer that is displaying the graphical element, e.g. a graphical user interface, may also be context- and/or situation-specific. Depending on a degree of transparency of one or more predetermined subareas, an environment of the display device is visible through the display screen unit. Advantageously, there is also no longer a need to produce cars with different displays, since the inventive display device may be used in an opaque variant of the sight protection element only, or, in a context-specific and/or situation-specific way, certain subareas, or all subareas, may be switched to preferably a more transparent or full transparent state.

In other words, a development effort is reduced, as well as a financial investment of the development. A vehicle producer may, additionally, sell a change of transparency as a function on demand by unlocking of transparency modes.

The inventive method for operating a display device of a motor vehicle comprises the following steps that are performed by a control device. A control module is a system unit that is designed to control one or more electrical systems or subsystems.

The control unit may, preferably, be designed as a control unit that is external to the motor vehicle, for example a control module of an internet based data server. The advantage of such external control module is a remote control of the display.

The display device comprises a display screen unit with a display surface, wherein the display surface comprises several predetermined subareas, and wherein a sight protection element of the display screen unit is designed to set for each of the subareas a respective degree of transparency and/or opacity. Said subareas, as a consequence, are also subareas of the display unit. The display device may, for example, be configured as an electronic instrument cluster or dashboard, and the display screen unit may, for example, comprise a so called smart glass display or intelligent display, or, alternatively, a combination of a transparent screen and/or a switchable film. Preferably, the display screen unit may be a combination of a transparent segmented LCD-display, e.g., a black-transparent LCD-display, and a T-OLED or other transparent display. Another example is a combination of a switchable foil, e.g. a black-transparent switchable foil, and a T-OLED display. The advantage of a T-OLED is that the colors of the T-OLED emit light, and black is passive, in other words no light is emitted. This leads to higher contrasts than, e.g., when using a TFT-display that has backlight everywhere.

The method comprises providing of the display screen unit in a basic mode, in which the sight protection element sets the same degree of transparency for each of the subareas in a basic value, wherein the basic value is a value for a first degree of transparency, preferably a value for a lower degree of transparency than a degree of complete transparency. For example, the basic mode may predetermine that all subareas are in an opaque state or condition.

This is followed by checking whether an unlocking signal is given, whereby the unlocking signal grants authorization of a user of the motor vehicle for using the display screen unit in a predetermined subarea unlock mode that predetermines an unlock value describing a different degree of transparency than the one with the basic value, preferably a higher degree of transparency, for at least one of the subareas. In other words, it is checked whether an unlocking signal is present that describes a subarea unlock mode in which a change of the degree of transparency is predetermined for certain subareas.

In case the authorization is given, a changing the degree of transparency only of the subareas predetermined by the unlock signal is performed, by means of the sight protection element, to the unlock value, for each of the predetermined subarea or subareas, and thereby providing the display screen unit in the predetermined subarea unlock mode.

The predetermined subarea unlock mode pre-sets that a central subarea with regard to an extension of the display screen unit remains opaque as in the basic mode, said central subarea displaying a graphical element. Additionally, the sight protection element sets the degree of transparency to the unlock value to turn the flanking subareas transparent for at least two subareas flanking said central subarea. In other words, said predetermined subarea unlock mode predetermines that a central part of the display surface remains opaque or basically opaque, whereby the flanking subareas turn transparent and thus provide a better spatial perception than the display screen unit in an entirely opaque basic mode. A way better spatial perception is provided and at the same time a better visibility of the graphical element, for example, a graphical user interface that is displayed, because the graphical element is accentuated by the flanking subareas.

The inventive method enables the advantages as mentioned above. As a result of some of the above-mentioned advantages, a driving safety is increased, as well as a sense of well-being, because the vehicle's passengers feel less enclosed by the display.

Preferably, the display screen unit of the display device is a free-standing or self-supporting one in an interior space of the motor vehicle. Applied to such kind of display device, the inventive method allows several degrees of sense of spaciousness or spatial perception, and possibility to see through the display on the road depending on the layout of the vehicle, depending on the selected subarea unlock mode. Preferably, the display device may be wrapped, or curved, or double-curved, or bent, or have a tree-dimensional shape.

A much better spatial perception may be provided, if, according to a preferred embodiment of the inventive method, wherein in the predetermined subarea unlock mode, the sight protection element sets at least the subarea displaying the graphical element or each of the subareas to the unlock value. For example, each of the subareas may be fully transparent. Most preferably, said predetermined subarea unlock mode may be one of several predetermined subarea unlock modes.

The differences in spatial perception between the different modes, i.e. between the basic mode and the at least one predetermined subarea unlock mode, varies best, if the basic value describes a transparency of less than 50 percent, or in a range of 70 percent to 80 percent, preferably a complete opacity, as the degree of the transparency. The more opaque the sight protection element is, the better is the effect if, e.g., bright sunlight is shining into the vehicle.

In order to provide a specific context-related or situation-related control of the display device, the control module may, according to a further embodiment of the inventive method, perform providing the unlocking signal in dependence of: a) a presence of a payment information describing a monetary value and/or describing an effected payment operation of the user, preferably an effected payment operation of the user in the amount of the monetary value; and/or b) a time information describing an indication of time for which the subarea unlock mode is provided; and/or c) a current mode of operation of the motor vehicle. In a further embodiment, providing the unlocking signal may be in dependence of a bonus program provided by the motor vehicle company, for example in dependence of points collected by the user or a special offer, e.g., a "Christmas special offer".

The same advantage is achieved by a further embodiment of the inventive method, according to which the control module performs a predetermining of the subareas and/or the unlock value in dependence of a) a presence of a payment information describing a monetary value and/or describing an effected payment operation of the user, preferably an effected payment operation of the user in the amount of the monetary value; and/or b) a time information describing an indication of time, for which the subarea unlock mode is provided; and/or c) a current mode of operation of the motor vehicle.

The above mentioned object is solved by a control module, which is configured to perform a method according to the above described embodiments. Preferably, the control module may be designed as an electronic control unit (ECU), or as an integrated circuit. Preferably, the control module may comprise a processor unit, i.e. a unit for data processing. The optional processor unit may comprise at least one microprocessor and/or at least one microchip. The control module may optionally comprise a data storage, whereby the data storage may have stored a program code for performing the inventive method. Thereby, the program code is designed to cause the control module to perform any of the above mentioned embodiments of the inventive method when executed by the processor unit. The same advantages arise as already described above.

The object is solved by a display device, comprising a display screen unit, whereby the display screen unit comprising a display surface with several predetermined subareas, the display screen unit further comprising a sight protection element that is configured to set for each of the subareas a respective degree of a transparency. The inventive display device also comprises an embodiment of the inventive control module.

In one embodiment of the inventive display device, the sight protection element may be designed to be planar and to be arranged in a first display plane of the display screen unit. In this embodiment, the display screen unit further comprises a planar, transparent screen element arranged in a further display plane of the display screen unit, and in a direction of vision of a user positioned in front of the sight protection element, and arranged in a planar manner on the sight protection element. Thereby the transparent screen element may, for example, be designed as a glass screen.

In another embodiment, the display screen unit may be curved in at least one direction, and/or have any 3-dimensional shape.

The object is solved by a motor vehicle that comprises an embodiment of the inventive display device. The motor vehicle may preferably be designed as a passenger vehicle.

In a preferred embodiment of the motor vehicle, the display screen unit of the display device is free-standing, in other words a self-supporting one or a stand-alone display screen unit, respectively. The term "free-standing" is to be understood in a way that at least a front side and a backside of the display screen unit is not attached to a support or other component of the vehicle or of the display device.

Advantageous embodiments of the method according to the present invention are to be regarded as advantageous embodiments of the devices according to the present invention and vice versa.

Further advantages, features, and details of the present invention derive from the following description of a preferred embodiment as well as from the drawings.

In the following, examples of the invention are described. The figures show in:
- Fig. 1: a schematic illustration of a preferred embodiment of the method of the invention, and the devices of the invention,
- Fig. 2: a schematic illustration of a further preferred embodiment of the method of the invention with the display screen unit in a first, basic mode, and the devices of the invention,
- Fig. 3: a schematic illustration of the method of the invention with the display screen unit in a first sub-area unlock mode, and the devices of the invention,
- Fig. 4: a schematic illustration of a further preferred embodiment of the method of the invention with the display screen unit in a further subarea unlock mode, and the devices of the invention,
- Fig. 5: a schematic illustration of a further preferred embodiment of the display screen unit of the invention in a cross section,
- Fig. 6: a schematic illustration of a further preferred embodiment of the display screen unit of the invention,
- Fig. 7: a schematic illustration of a further preferred embodiment of the display screen unit of the invention,
- Fig. 8: a schematic illustration of a further preferred embodiment of the display screen unit of the invention,
- Fig. 9: a schematic illustration of a further preferred embodiment of the display screen unit of the invention,
- Fig. 10: a schematic illustration of a further preferred embodiment of the display screen unit of the invention,
- Fig. 11: a schematic illustration of a further preferred embodiment of the display screen unit of the invention, and
- Fig. 12: a schematic illustration of a further preferred embodiment of the display screen unit of the invention.

In the figures the same elements or elements having the same functions are indicated by the same reference signs.

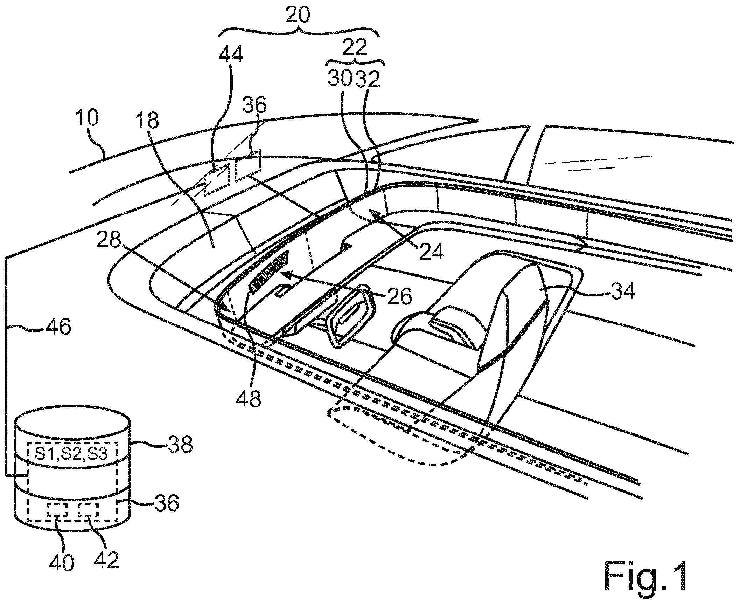

Fig. 1 exemplifies the principal of the inventive method, and the inventive display device 20. The display device 20 comprises a display screen unit 22, wherein a display surface comprises several predetermined subareas 24, 26, 28. The display screen unit 22 also comprises a sight protection element 30. In the example of Fig. 1, the display screen unit 22, may, for example, comprise a planar, transparent screen element 32, for example a LCD display a transparent light emitting display ("T-OLED"), or TFT display, whereby the transparent display 12 may, for example, be designed to display a graphical content in black and/or transparent, or to show all colors except black while being relatively transparent. The transparent screen element 32 may be planar, and be arranged in a planar manner on a planarly designed sight protection element 30, for example a switchable foil or a switchable film, for example the Gauzy film or a segmented transparent LCD-display that may be laminated on the transparent screen element 32. A laminated display screen unit 22 has a very homogenous look and shows all colors including black.

Alternatively, the display screen unit 22 may, for example, be a smart glass display as known from prior art.

Preferably, the display screen unit 22 may be free-standing, i.e. a stand-alone display screen unit 22. Said display screen unit 22 may, for example, be arranged in a distance to the background 18 as explained above, or may see through to the outside of the vehicle 10, such that, in a predetermined subarea unlock mode in which the display screen unit 22 is in a fully transparent state, a user on a vehicle seat 34 may see through the display screen unit 22 onto the background 18. Alternatively, a front hood of the vehicle 10 may have a concave design, so that the user may see through the display screen unit 22 and over the concave hood onto the road.

The display device 20 may optionally also comprises a control module 36, that, for example, may be a control module 36 of vehicle 10. The control module 36 may, if constructed of a component of the vehicle 10, be designed as an electronic control unit.

Preferably, as shown in Fig. 1, said control module 36 may be a component that is external to the motor vehicle 10, for example a control module 36 of a data server unit 38. In this case, the display device 20 does in other words not comprise the control module 36, and the display device 20 is remotely controlled. The control module 36 optionally may comprise a processor unit 40, and/or a storage unit 42.

In the following, the example of Fig. 1 is exemplified by a variant wherein the control module 36 is a control module 36 that is external to the motor vehicle 10. Nonetheless, the steps describes below may likewise be performed by the optional control module 36 of display device 20.

In the example of Fig. 1, the display device 20 may optionally comprise a communication module 44 that may comprise a communication unit known from prior art for communicating with the control module 36 via wireless or wire-bound communication means, e.g., via a cellular phone network, Wi-Fi, or internet. A communication link 46 may be used to transfer and exchange data.

The display screen unit of Fig. 1 displays a graphical element 48, for example a picture, a graphical user interface ("GUI"), a picture, a computer animation of a digital fish tank, or a movie, for example on a central or lateral subarea 26. In a basic mode, the sight protection element 30 may switch, for example, all subareas 24, 26, 28 into an entirely opaque state, such that a user on a vehicle seat 34 may see the graphical element 48 on an opaque background. Since the display screen unit 22 may, preferably, extend from the left side of an inner space of the vehicle 10 to the right side, the user cannot see through any of the subareas 24, 26, 28. In order to provide opacity, the sight protection element 30 may be pre-set by control module 36. The step of providing said display screen unit 22 in said basic mode is depicted as method step S1.

For example, all pixels (for 100% opacity), or 80% of the pixels (for 80% opacity), of the sight protection element 30 may be set to black, for example by rasterizing the pixels. As an example, a pixel may exemplary have an area of 1 millimeter x 1 millimeter.

The control module 36 may, for example, regularly (or, e.g., upon request) check whether an unlocking signal is given, e.g. provided (S2). Such unlocking signal may, for example, be generated and/or be transmitted to control module 36 if the user of vehicle 10 has made a payment for unlocking, for example, one of several subarea unlock modes. In this example, the unlocking signal may, for example, describe a monetary value of said payment and/or the subarea unlock mode for which the user has paid for.

In another example, a subarea unlock mode may be activated or deactivated in case for example, an account of the user is falling below a threshold of a monetary value of the account. In said example, a subarea unlock mode may be activated that describes 50 percent transparency for all subareas compared to, for example, 100 percent transparency.

In case the unlocking signal is provided depending on a certain or current mode of operation of the motor vehicle, the unlocking signal may, for example, be generated and/or be transmitted by a respective system of the vehicle 10, for example by a driver assistance system. Thereby, the unlocking signal may, for example, describe that the vehicle 10 is driven in a piloted driving mode.

The provided unlocking signal may describe which of the subareas 24, 26, 28 are to be switched into a more transparent state, and/or may describe the degree of transparency, for example, for each of the subareas 24, 26, 28. An authorization of the user to use the display screen unit 22 in one of the predetermined subarea unlock modes different to the basic mode may be confirmed, if said unlocking signal is given, in other words in case such unlocking signal is present. Upon a positive result of the checking step S2 the control module 36 may change the degree of transparency according to the predetermined subarea unlock mode as described by the unlocking signal. The process of changing the degree or transparency (S3) may be performed by generating a respective control signal, to control the sight protection element 30 to the degree of transparency for certain subareas 24, 26, 28.

For example, the basic value of a degree of transparency for all subareas 24, 26, 28 in the basic mode may, for example, be in the range between zero percent of transparency and 49 percent transparency, preferably in a range of zero to 20 percent, most preferably zero percent transparency.

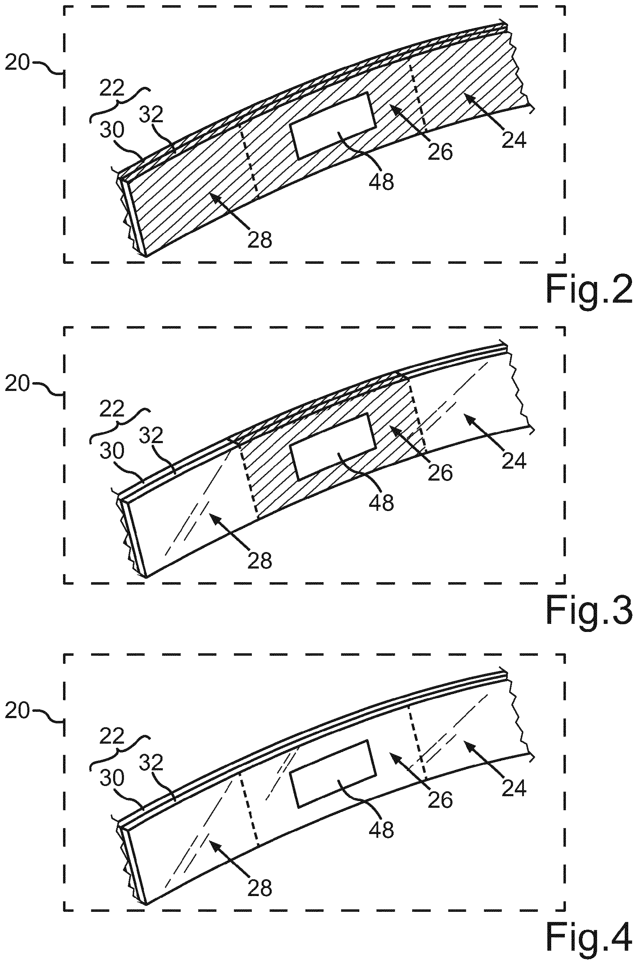

In other words a high degree of opacity of the display screen unit 22 is preferred in the basic mode. Such basic mode for the display screen unit 22 is exemplary shown in Fig. 2, whereby Fig. 2 shows a detail of the display device 20. The graphical element 48, for example a graphic user interface, may still be seen by a user in front of the opaque background sight protection element 30.

For example, such basic mode may be referred to as "entry mode", whereby the sight protection element 30 may, for example, have an opacity of 100 percent, in other word a transparency of zero percent. The sight protection element 30 that, for example, may be designed as a switchable foil or a switchable film or a switchable display, may be switched to opacity (or black color), no matter what the size of the exemplary graphical user interface is, or no matter how many graphical elements 48 are displayed. The user may see all graphical elements 48 contents, but there is no or few transparency of the display, such that the user has few or low perception of space.

Fig. 3 shows the predetermined subarea unlock mode according to the invention, referred to as "medium mode", in which subarea 26, for example a central area of the display screen unit 22, may show the graphical element 48. Said subarea 26 may, for example, still be set to 100 percent of opacity, in other words zero percent transparency, whereas the other subareas 24, 28 may be set in a state or condition or setting wherein they are completely transparent or more transparent than subarea 26 displaying the graphical element 48. In other words, in the example of Fig. 3, subareas 24, 28 of the exemplary switchable display, preferably small subareas 24, 28, may be set or switched to transparency, such that the user has more perception of space or may see through the display screen unit 22 at least as far as the flanking subareas 24, 28 are concerned. For example, the user may thus have a view on the road.

Fig. 4 shows an example of a further subarea unlock mode, in which, for example, all subareas 24, 26, 28 may be set or switched to a more transparent state, preferably be fully transparent. In other words, the entire display screen unit 22 may be transparent. In such mode that, for example, may be referred to as "high mode", the entire display or display screen unit 22 may be switched/set transparent. The user has the possibility of maximal transparency and perception of space, and may see through the display screen unit 22, for example, on the road in case, e.g., the vehicle's hood is concave, or in case the vehicle has a corresponding layout, e.g., a corresponding eye point, a corresponding position of the display device, or a greenhouse design that is enabling such view.

Optionally, a subarea unlock mode may be available temporarily, for example around Christmas, whereby the unlocking signal may, for example, authorize the user to use the display screen unit 22 in one of the subarea unlock modes without any charge.

Optionally, the unlocking signal may describe a predetermined content of a media file to be displayed by the display screen unit 22, for example a movie. An authorization may, in this example, be given, if the user wants to display such media content. In other words, the user may be authorized to use a corresponding subarea unlock mode, while displaying said exemplary movie. For example, the movie may always be seen after ordering the subarea unlock mode.

Other possible options may comprise, that a subarea unlock mode may be used if a user is driving in a very ecological way, or if activated by, for example, speech input or via eye tracking. If the user, for example, is doing such speech input for changing the degree of transparency for one or more subareas 24, 26, 28, the control module 36 may optionally generate a speech signal describing a speech output, whereby the user is asked whether he wants to watch a movie, and, optionally, informing the user about the price for unlocking a corresponding subarea unlock mode.

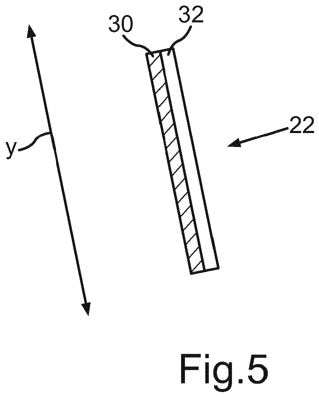

Fig. 5 exemplary shows the display screen unit 22 in a cross section, whereby, for example, the display screen unit 22 may comprise a planar, transparent screen element 32, and a sight protection element 30 that is also designed to be planar and to be arranged in a respective display plane of the display screen unit 22. Alternatively, the transparent screen element 32 and/or the sight protection element 30 may be curved, double-curved, or three-dimensional. The sight protection element 30 may, preferably, be designed as a switchable foil or a switchable film, which may switch from opaque to transparent and vice versa, preferably in several degrees or even continuously.

The transparent screen element 32 is preferably transparent. The cross section of Fig. 5 is preferably one along a vertical axe Y of vehicle 10, or the display screen unit 22, respectively, when arranged in the vehicle 10.

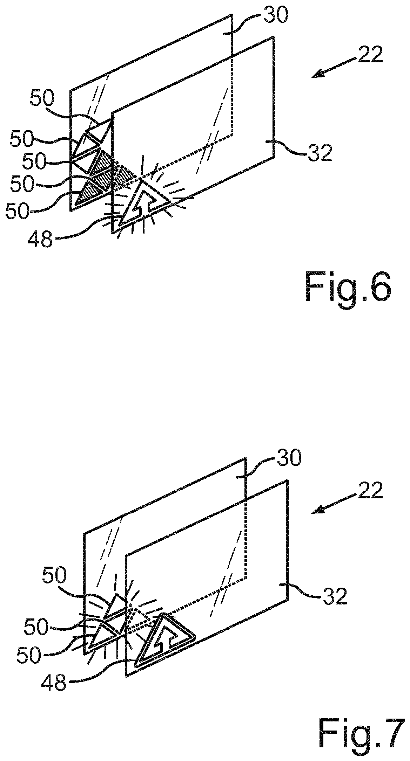

In Fig. 6 the graphical element 48 exemplarily is presented as a logo for artificial intelligence in a triangular shape. The display screen unit 22 may be composed of two layers 32 and 30. The display screen unit 22 is presented in Fig. 6 (and correspondingly also in Fig. 7) in an exploded view of the two layers 32 and 30. The first layer, the screen element 32, may for instance be configured as a transparent OLED screen. This is configured to display at least one graphical element 48 for instance as a displayed graphic or a transparent diaphane. The transparent OLED screen in the example of Fig. 6 and Fig. 7 is laminated with a sight protection element 30, which for instance is configured as a switchable film. The switchable film may be electrically conductive and be subdivided into a plurality of predetermined portions 50. Shown here, a predetermined portion 50, e.g. a pixel or segment (i.e. a "large pixel"), may have the shape of a triangle, wherein all triangles may be composed to form the overall surface of the switchable film. The predetermined portion 50 alternatively may for instance have the shape of a square and/or a rectangle and/or a hexagon and/or a random geometrical figure that, for example, may cover a complete surface.

The individual predetermined portions 50 are capable of being switched by the control module 36 of the display device 20 so that an electrical voltage may merely be applied in one or a selection of the plurality of predetermined portions 50. Depending on the applied voltage the predetermined portion 50 changes from a transparent state into an opaque state. Therein a transparent state has a transparency of at least 40 % or at least 50 % or at least 60 %, or at least 90 %, or more than 90%. An opaque state has an opacity of at least 70 %, or at least 80 % or at least 90 %, or more than 90%. The predetermined portions 50, which are switched by the control module 36 into an opaque mode, are selected in such a way that these at least partly overlap with the transparent diaphane displayed on the transparent OLED. Shown here are four triangles, each of which form a predetermined portion 50, switched into the opaque state so that the four triangles in composition form a triangular surface, which corresponds to the triangular surface of the transparent illuminated image on the transparent OLED screen. Thus, on the whole the display screen unit 22 a graphical element 48 may be recognized, wherein merely the background of the graphical element 48 is opaque. The remaining display screen unit 22 is transparent.

In Fig. 7, an alternative embodiment of the display screen unit 22 is shown. In the final result this displays the same graphical element 48 as in the embodiment shown in Fig. 6. The transparent screen element 32 and the sight protection element 30 of the display screen unit 22, however, may be configured differently. The organic light-emitting diodes may be arranged distributed across an overall surface of the transparent screen element 30. In this way equally in the sight protection element 30 portions 50 may be formed, each of which may be switched individually to be transparent or opaque.

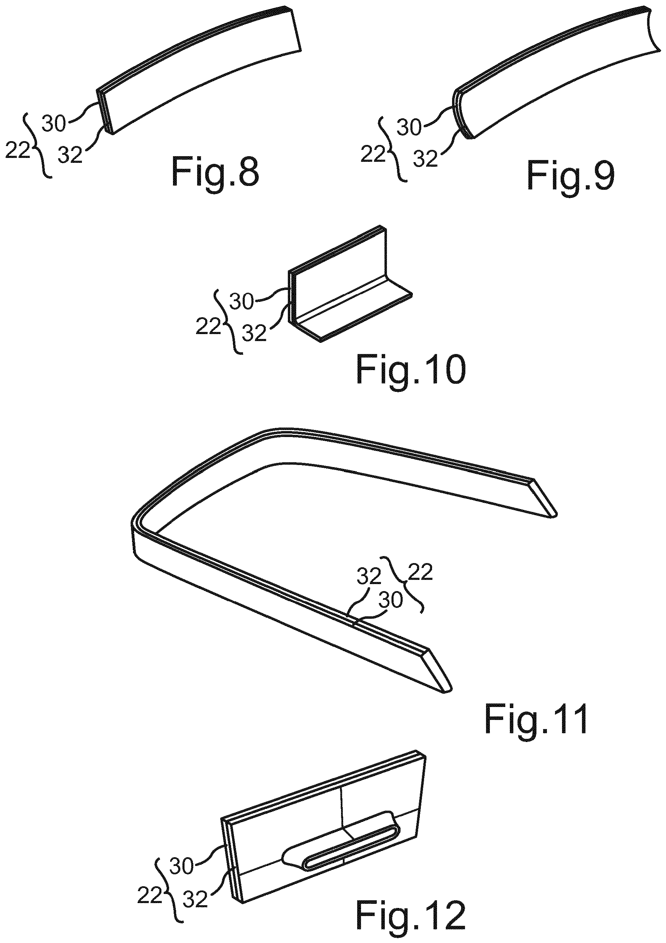

Alternatively to the shape of the display screen unit 22 as described above, display screen unit 22 may have other possible shapes. For instance, the display screen unit 22 may be curved in one direction (Fig. 8), curved in two directions (Fig. 9), bent (Fig. 10, Fig. 11) or have a tree-dimensional shape (Fig. 12), or may have a combination of any of these shapes.

In another example, the visibility of the graphical element 48, e.g., a graphic user interface, to an outside of the vehicle 10 may be controlled by the sight protection element 30, e.g., by a switchable foil, a switchable film, or a switchable display. When a subarea 24, 26, 28, e.g., a segment of the display surface, is transparent, the graphical element 48 that lies on the transparent screen element 32 or on other display can become visible to the outside of the vehicle 10, dependent on the layout or of the vehicle 10 or the arrangement of the display screen unit 22 in the vehicle 10. By switching the sight protection element 30 to transparent, a message may be shown like, e.g., "Hello Mr. Rodgers". Preferably, a graphical element 48 on the transparent screen element 32, e.g., a graphic user interface on a T-OLED, may be visible from both sides. The sight protection element 30 may then act as a shutter.

Altogether, the examples describe a transparent display on demand, whereby subareas 24, 26, 28 of a display screen unit 22 may be set transparent, for example for a fee.

According to another example, a producer of vehicles may produce one version of a display device 20 only, for example a lamination of the transparent screen element 32, and a sight protection element 30, for example a switchable foil or a switchable film; or a switchable display. For example for a fee, a transparency may be unlocked stepwise. Preferably, three different variants configuration may be provided, for example three different subarea unlock modes. Said preferred subarea unlock modes are described in Fig. 2, Fig. 3, and Fig. 4.

Fig. 5 is showing a preferred example of the display screen unit 22.

## Claims

1. Method for operating a display device (20) of a motor vehicle (10), wherein the display device (20) comprises a display screen unit (22) with a display surface, wherein the display surface comprises several predetermined subareas (24, 26, 28), and wherein a sight protection element (30) of the display screen unit (22) is designed to set for each of the subareas (24, 26, 28) a respective degree of a transparency,
the method comprising, performed by a control module (36):
- providing the display screen unit (22) in a basic mode, in which the sight protection element (30) sets the same degree of transparency for each of the subareas (24, 26, 28) in a basic value, wherein the basic value is a value for a first degree of transparency (S1),
- checking whether an unlocking signal is given which grants authorization of a user of the motor vehicle (10) for using the display screen unit (22) in a predetermined subarea unlock mode that predetermines an unlock value describing a different degree of transparency than the one with the basic value for at least one of the subareas (24, 26, 28, S2), and
- in case the authorization is given: changing the degree of transparency only of the subareas (24, 26, 28) predetermined by the unlock signal, by means of the sight protection element (30), to the unlock value, and thereby providing the display screen unit (22) in the predetermined subarea unlock mode (S3);
wherein the method is **characterized in that**, in the predetermined subarea unlock mode:
- a subarea (26) that is central with regard to an extension of the display screen unit (22) remains opaque as in the basic mode, said central subarea (26) displaying a graphical element (48); and
- the sight protection element (30) for at least two subareas (24, 28) flanking said central subarea (26) sets the degree of transparency to the unlock value to turn the flanking subareas transparent.

2. Method according to claim 1,
wherein the display screen unit (22) of the display device (20) is free-standing in an interior space of the motor vehicle (10).

3. Method according to any one of the preceding claims,
wherein in the predetermined subarea unlock mode:
- the sight protection element (30) sets at least the subarea (26) displaying the graphical element (48) or each of the subareas (24, 26, 28) to the unlock value.

4. Method according to any one of the preceding claims,
wherein the basic value describes a less than 50 percent transparency, preferably a complete opacity, as degree of the transparency.

5. Method according to any one of the preceding claims,
the method comprising, performed by the control module (36):
- providing the unlocking signal in dependence of, and/or predetermining the subareas (24, 26, 28) and/or the unlock value in dependence of: a) a presence of a payment information describing a monetary value and/or describing an effected payment operation of the user; and/or b) a time information describing an indication of time for which the subarea unlock mode is provided; and/or c) a current mode of operation of the motor vehicle (10).

6. Control module (36), which is configured to perform a method according to any one of the preceding claims.

7. Display device (20), comprising
- a display screen unit (22) comprising a display surface comprising several predetermined subareas (24, 26, 28); the display screen unit (22) further comprising a sight protection element (30) that is configured to set for each of the subareas (24, 26, 28) a respective degree of a transparency, and
- a control module (36) according to claim 6.

8. Display device (20) according to claim 7,
wherein the sight protection element (30) is designed to be planar and to be arranged in a first display plane of the display screen unit (22), and wherein the display screen unit (22) further comprises:
- a planar, transparent screen element (32) arranged in a further display plane of the display screen unit (22) and in a direction of vision of a user positioned in front of the sight protection element (30) and arranged in a planar manner on the sight protection element (30).

9. Motor vehicle (10), comprising a display device (20) according to claim 7 or 8.

10. Motor vehicle (10) according to claim 9, wherein the display screen unit (22) of the display device (20) is free-standing.

## Patentansprüche

1. Verfahren zum Betreiben einer Anzeigevorrichtung (20) eines Motorfahrzeugs (10), wobei die Anzeigevorrichtung (20) eine Anzeigeschirmeinheit (22) mit einer Anzeigefläche umfasst, wobei die Anzeigefläche mehrere vorbestimmte Teilbereiche (24, 26, 28) umfasst und wobei ein Sichtschutzelement (30) der Anzeigeschirmeinheit (22) gestaltet ist, für jeden der Teilbereiche (24, 26, 28) einen jeweiligen Transparenzgrad einzustellen,
das Verfahren umfassend, durchgeführt durch ein Steuermodul (36):
- Bereitstellen der Anzeigeschirmeinheit (22) in einem Basismodus, in dem das Sichtschutzelement (30) denselben Transparenzgrad für jeden der Teilbereiche (24, 26, 28) in einem Basiswert einstellt, wobei der Basiswert ein Wert für einen ersten Transparenzgrad (S1) ist,
- Prüfen, ob ein Entriegelungssignal gegeben ist, das Autorisierung eines Benutzers des Motorfahrzeugs (10) zur Verwendung der Anzeigeschirmeinheit (22) in einem vorbestimmten Teilbereichentriegelungsmodus gestattet, der vorab einen Entriegelungswert bestimmt, der einen anderen Transparenzgrad als jenen mit dem Basiswert für mindestens einen der Teilbereiche (24, 26, 28, S2) beschreibt, und
- falls die Autorisierung gegeben ist: Ändern des Transparenzgrads nur der Teilbereiche (24, 26, 28), die durch das Entriegelungssignal vorbestimmt sind, mit Hilfe des Sichtschutzelements (30), auf den Entriegelungswert, und dadurch Bereitstellen der Anzeigeschirmeinheit (22) in dem vorbestimmten Teilbereichentriegelungsmodus (S3);
wobei das Verfahren **dadurch gekennzeichnet ist, dass** in dem vorbestimmten Teilbereichentriegelungsmodus:
- ein Teilbereich (26), der in Bezug auf eine Erweiterung der Anzeigeschirmeinheit (22) zentral ist, im Basismodus undurchsichtig bleibt, wobei der zentrale Teilbereich (26) ein grafisches Element (48) anzeigt; und
- das Sichtschutzelement (30) für mindestens zwei Teilbereiche (24, 28), die den zentralen Teilbereich (26) flankieren, den Transparenzgrad auf den Entriegelungswert einstellt, um die flankierenden Teilbereiche transparent zu machen.

2. Verfahren nach Anspruch 1,
wobei die Anzeigeschirmeinheit (22) der Anzeigevorrichtung (20) in einem Innenraum des Motorfahrzeugs (10) freistehend ist.

3. Verfahren nach einem der vorstehenden Ansprüche,
wobei in dem vorbestimmten Teilbereichentriegelungsmodus:
- das Sichtschutzelement (30) mindestens den Teilbereich (26), der das grafische Element (48) anzeigt, oder jeden der Teilbereiche (24, 26, 28) auf den Entriegelungswert einstellt.

4. Verfahren nach einem der vorstehenden Ansprüche,
wobei der Basiswert eine weniger als 50 Prozent Transparenz, vorzugsweise eine vollständige Undurchsichtigkeit, als Transparenzgrad beschreibt.

5. Verfahren nach einem der vorstehenden Ansprüche,
das Verfahren umfassend, durchgeführt durch das Steuermodul (36):
- Bereitstellen des Entriegelungssignals abhängig von und/oder Vorbestimmen der Teilbereiche (24, 26, 28) und/oder des Entriegelungswerts abhängig von:
a) einem Vorhandensein von Zahlungsinformationen, die einen Geldwert beschreiben und/oder einen erfolgten Zahlungsvorgang des Benutzers beschreiben; und/oder
b) einer Zeitinformation, die eine Zeitangabe beschreibt, für die der Teilbereichentriegelungsmodus bereitgestellt ist; und/oder c) einem aktuellen Betriebsmodus des Motorfahrzeugs (10).

6. Steuermodul (36), das konfiguriert ist, ein Verfahren nach einem der vorstehenden Ansprüche durchzuführen.

7. Anzeigevorrichtung (20), umfassend
- eine Anzeigeschirmeinheit (22), umfassend eine Anzeigefläche, die mehrere vorbestimmte Teilbereiche (24, 26, 28) umfasst; wobei die Anzeigeschirmeinheit (22) weiter ein Sichtschutzelement (30) umfasst, das konfiguriert ist, für jeden der Teilbereiche (24, 26, 28) einen jeweiligen Transparenzgrad einzustellen, und
- ein Steuermodul (36) nach Anspruch 6.

8. Anzeigevorrichtung (20) nach Anspruch 7,
wobei das Sichtschutzelement (30) gestaltet ist, flach zu sein und in einer ersten Anzeigeebene der Anzeigeschirmeinheit (22) angeordnet zu sein, und wobei die Anzeigeschirmeinheit (22) weiter umfasst:
- ein flaches, transparentes Schirmelement (32), das in einer weiteren Anzeigeebene der Anzeigeschirmeinheit (22) und in einer Sichtrichtung eines Benutzers angeordnet ist, der vor dem Sichtschutzelement (30) positioniert ist, und flach auf dem Sichtschutzelement (30) angeordnet ist.

9. Motorfahrzeug (10), umfassend eine Anzeigevorrichtung (20) nach Anspruch 7 oder 8.

10. Motorfahrzeug (10) nach Anspruch 9, wobei die Anzeigeschirmeinheit (22) der Anzeigevorrichtung (20) freistehend ist.

## Revendications

1. Procédé pour faire fonctionner un dispositif d'affichage (20) d'un véhicule à moteur (10), dans lequel le dispositif d'affichage (20) comprend une unité d'écran d'affichage (22) avec une surface d'affichage, dans lequel la surface d'affichage comprend plusieurs sous-zones prédéterminées (24, 26, 28), et dans lequel un élément de protection de vision (30) de l'unité d'écran d'affichage (22) est conçu pour définir pour chacune des sous-zones (24, 26, 28) un degré respectif d'une transparence,
le procédé comprenant, exécutées par un module de commande (36), les étapes consistant à :
- fournir l'unité d'écran d'affichage (22) dans un mode de base, dans lequel l'élément de protection de vision (30) définit le même degré de transparence pour chacune des sous-zones (24, 26, 28) dans une valeur de base, dans lequel la valeur de base est une valeur pour un premier degré de transparence (S1),
- vérifier si un signal de déverrouillage est donné, qui autorise un utilisateur du véhicule à moteur (10) à utiliser l'unité d'écran d'affichage (22) dans un mode de déverrouillage de sous-zone prédéterminé qui prédétermine une valeur de déverrouillage décrivant un degré de transparence différent de celui avec la valeur de base pour au moins une des sous-zones (24, 26, 28, S2), et
- dans le cas où l'autorisation est donnée : changer le degré de transparence uniquement des sous-zones (24, 26, 28) prédéterminées par le signal de déverrouillage, au moyen de l'élément de protection de vision (30), à la valeur de déverrouillage, et fournir ainsi l'unité d'écran d'affichage (22) dans le mode de déverrouillage de sous-zone prédéterminée (S3) ;
dans lequel le procédé est **caractérisé en ce que**, dans le mode de déverrouillage de sous-zone prédéterminée :
- une sous-zone (26) qui est centrale par rapport à une extension de l'unité d'écran d'affichage (22) reste opaque comme dans le mode de base, ladite sous-zone centrale (26) affichant un élément graphique (48) ; et
- l'élément de protection de vision (30) pour au moins deux sous-zones (24, 28) encadrant ladite sous-zone centrale (26) règle le degré de transparence sur la valeur de déverrouillage pour rendre transparentes les sous-zones encadrantes.

2. Procédé selon la revendication 1,
dans lequel l'unité d'écran d'affichage (22) du dispositif d'affichage (20) est indépendant dans un espace intérieur du véhicule à moteur (10).

3. Procédé selon l'une quelconque des revendications précédentes,
dans lequel, dans le mode de déverrouillage de sous-zone prédéterminée :
- l'élément de protection de vision (30) règle au moins la sous-zone (26) affichant l'élément graphique (48) ou chacune des sous-zones (24, 26, 28) à la valeur de déverrouillage.

4. Procédé selon l'une quelconque des revendications précédentes,
dans lequel la valeur de base décrit une transparence inférieure à 50 %, de préférence une opacité complète, comme degré de transparence.

5. Procédé selon l'une quelconque des revendications précédentes,
le procédé comprenant, exécutée par le module de commande (36), l'étape consistant :
- fournir le signal de déverrouillage en fonction de, et/ou prédéterminer les sous-zones (24, 26, 28) et/ou la valeur de déverrouillage en fonction de :
a) la présence d'une information de paiement décrivant une valeur monétaire et/ou décrivant une opération de paiement effectuée de l'utilisateur ; et/ou
b) une information de temps décrivant une indication de temps pendant lequel le mode de déverrouillage de sous-zone est fourni ; et/ou c) un mode de fonctionnement actuel du véhicule à moteur (10).

6. Module de commande (36), qui est configuré pour exécuter un procédé selon l'une quelconque des revendications précédentes.

7. Dispositif d'affichage (20), comprenant
- une unité d'écran d'affichage (22) comprenant une surface d'affichage comprenant plusieurs sous-zones prédéterminées (24, 26, 28) ; l'unité d'écran d'affichage (22) comprenant en outre un élément de protection de vision (30) qui est configuré pour régler pour chacune des sous-zones (24, 26, 28) un degré respectif de transparence, et
- un module de commande (36) selon la revendication 6.

8. Dispositif d'affichage (20) selon la revendication 7,
dans lequel l'élément de protection de vision (30) est conçu pour être plan et pour être agencé dans un premier plan d'affichage de l'unité d'écran d'affichage (22), et dans lequel l'unité d'écran d'affichage (22) comprend en outre :
- un élément d'écran transparent plan (32) agencé dans un plan d'affichage supplémentaire de l'unité d'écran d'affichage (22) et dans une direction de vision d'un utilisateur positionné devant l'élément de protection de vision (30) et agencé de manière plane sur l'élément de protection de vision (30).

9. Véhicule à moteur (10), comprenant un dispositif d'affichage (20) selon la revendication 7 ou 8.

10. Véhicule à moteur (10) selon la revendication 9, dans lequel l'unité d'écran d'affichage (22) du dispositif d'affichage (20) est indépendante.
